# EUROPEAN PATENT SPECIFICATION

(11) **EP 4 602 665 B1**
(45) Date of publication and mention of the grant of the patent: **25.11.2026**
(21) Application number: 22801094.8
(22) Date of filing: 10.10.2022
(51) Int. Cl.: H01M 8/04014

(54) **FUEL CELL SYSTEM, VEHICLE & METHOD FOR SUPPRESSING MIST FORMATION**
BRENNSTOFFZELLENSYSTEM, FAHRZEUG UND VERFAHREN ZUR UNTERDRÜCKUNG VON NEBELBILDUNG
SYSTÈME DE PILE À COMBUSTIBLE, VÉHICULE ET PROCÉDÉ DE SUPPRESSION DE LA FORMATION DE BRUME

(43) Date of publication of application: 20.08.2025
(73) Proprietor: VOLVO TRUCK CORPORATION, 405 08 Göteborg (SE)
(72) Inventor: Andersson, Arne, 435 42 Mölnlycke (SE)
(74) Representative: Valea AB
(86) International application number: PCT/EP2022/078115
(87) International publication number: WO 2024/078690

(56) References cited:
- CN-A- 113 299 947
- US-A1- 2021 135 255
- US-B2- 8 268 470

## Description

### TECHNICAL FIELD

The disclosure relates generally to a fuel cell system, vehicle and method for suppressing mist formation, i.e. a fuel cell system for reducing or eliminating the risk of mist formation. The disclosure also relates to the use of such a fuel cell system, vehicle and method.

### BACKGROUND

A fuel cell is an electrochemical cell that converts the chemical energy of a fuel, which is often hydrogen gas, and an oxidizing agent, which is often oxygen, into electricity through redox reactions. In addition to generating electricity, fuel cells produce water vapour and heat. When one or more fuel cells are mounted on a vehicle, the fuel cell exhaust is usually emitted from an exhaust pipe directly into the atmosphere. When the fuel cell exhaust comes into contact with cold air, it is cooled and loses its capacity to hold water vapour, whereupon excess water vapour condenses to form liquid water in the form of a mist.

A heavy-duty vehicle, such as a truck, comprising a stack of fuel cells may consume about 60 kg of hydrogen per day and may emit about 540 kg of water vapour in its fuel cell exhaust. The emitted water vapour may form a large amount of mist, especially on cold or humid days. Such a mist may be perceived as harmful exhaust emissions. Additionally, even though water vapour is a transparent and colourless gas, when it condenses and forms a mist the small drops of water suspended in the mist may reflect or scatter light, which may give the mist a blue or grey appearance. Such a mist may not only adversely affect the merchantability of the vehicle but may also may obscure the visibility of road users.

Additionally, water droplets in the mist may be precipitated onto the windscreen of the vehicle producing the mist, or the windscreen of a vehicle driving behind the vehicle producing the mist, which may obscure the vision of vehicle occupants. Furthermore, in cold conditions, water droplets that precipitate on some part of a vehicle may freeze and the ice formed on a vehicle may become loose and thereby cause a further safety hazard. US 8 268 470 discloses a fuel cell system wherein the exhaust gas is diluted and then directly discharged to the outside.

### SUMMARY

According to a first aspect, the disclosure concerns a fuel cell system comprising at least one fuel cell. The fuel cell system comprises at least one cooling system configured to cool the at least one fuel cell, whereby the at least one cooling system comprises at least one fluid intake, and one or more cooling fans located downstream of the at least one fluid intake, and at least one radiator located upstream and/or downstream of the one or more cooling fans. The fuel cell system also comprises an exhaust flow passage configured to convey fuel cell exhaust emitted from the at least one fuel cell away from the at least one fuel cell, and at least one valve configured to selectively direct an amount of the fuel cell exhaust in the exhaust flow passage into the at least one cooling system via the at least one fluid intake and/or via at least one inlet located between the one or more cooling fans and the at least one radiator. The opening degree of the at least one valve will thereby regulate the amount of fuel cell exhaust directed into the at least one cooling system via the at least one fluid intake and/or via the at least one inlet.

The first aspect of the disclosure seeks to suppress mist formation, i.e. reduce or eliminate the risk of mist formation.

The one or more cooling fans of the at least one cooling system is/are configured to mix fuel cell exhaust with fluid introduced into the at least one cooling system via the fluid intake, whereby water vapour in the fuel cell exhaust will be diluted.

The term "cooling system" used in this disclosure is intended to mean a set of components that enables a flow of a coolant to at least one fuel cell so as to absorb heat generated by the at least one fuel cell. The heated coolant will then return to the at least one radiator of the cooling system for cooling. As the heated coolant flows through the radiator, it gets cooled by the fluid and fuel cell exhaust that is introduced through the at least one fluid intake and/or through the at least one inlet of the cooling system, which will in turn be heated by the at least one radiator. Excess heat is thereby used to re-heat the fuel cell exhaust. In some examples the at least one radiator is configured to heat the fluid and the fuel cell exhaust mixture to a temperature of 55-65°C or 60-65°C.

Such dilution and heating of the fuel cell exhaust will reduce the amount of water vapour emitted from at least one fuel cell into the surroundings and will thereby suppress mist formation. Any mist that is formed from vapour coming out of the at least one radiator of the at least one cooling system will not be perceived as a harmful exhaust emission.

The term "fluid intake" used in this disclosure is intended to mean an intake for any fluid that is introduced into the at least one cooling system and which subsequently flows through the one or more fans and the at least one radiator of the cooling system. A "fluid" may be any gas, or any liquid, or any mixture of gases, or any mixture of liquids, or any mixture containing at least one liquid and at least one gas. The fluid that is introduced through the at least one fluid intake of the cooling system is preferably gas from the surroundings, such as air.

The term "surroundings" used in this disclosure is intended to mean any fluid, i.e. any gas and/or any liquid, around a fuel cell system. The surroundings may be outside air, or any other outside atmosphere in which mist may be formed. Alternatively, the surroundings may be an indoor atmosphere of a building or enclosed structure which at least partly houses the fuel cell system, such as indoor air. It may namely be desirable to reduce fuel cell exhaust emissions both indoors and outdoors.

The term "at least one radiator located upstream and/or downstream of the one or more cooling fans" is intended to mean that one or more radiators is/are located upstream of the one or more cooling fans, Additionally, or alternatively, one or more radiators is/are located downstream of the one or more cooling fans.

In some examples the fuel cell system is mounted on a mobile object, such as a vehicle. In some examples the at least one fluid intake is at least one ram-fluid intake, such as at least one ram-air intake. A ram-fluid intake is any fluid intake design that uses the dynamic fluid pressure created by the motion of a mobile object, such as a vehicle motion, or ram pressure, to allow a greater mass flow through the fluid intake. The at least one fluid intake may for example be located at the front of a mobile object, such as at the front of a vehicle. The fuel cell system according to the inventive concept may however also be mounted on a non-mobile object.

In some examples at least one fluid intake of the at least one fluid intake and/or at least one inlet of the at least one inlet is/are located upstream of the at least one radiator. In cases where there is just one fluid intake, or just one inlet, the fluid intake or the inlet is located upstream of at least one radiator. In cases where there is a plurality of fluid intakes, or a plurality of inlets, or at least one fluid intake and at least one inlet, then at least one fluid intake or at least one inlet is located upstream of at least one radiator. At least part, or all, of the fuel cell exhaust will thereby be injected upstream of at least one radiator. Alternatively, or additionally, at least part, or all, of the fuel cell exhaust may be injected downstream of at least one radiator, whereby the fuel cell exhaust is re-circulated in the at least one cooling system rather than being expelled from the fuel cell system. The at least one cooling system may comprise at least one water separator and water in the fuel cell exhaust passing through the at least one cooling system may be removed using the at least one water separator.

In some examples the fuel cell system comprises a control unit that is configured to control the amount of fuel cell exhaust emitted from the at least one fuel cell which is selectively directed into the at least one cooling system via the at least one fluid intake and/or via the at least one inlet. According to some examples the amount of fuel cell exhaust which is selectively directed into the at least one cooling system via the at least one fluid intake and/or via the at least one inlet may range from 0% to 100%, or between any desired minimum amount and any desired maximum amount. The minimum amount may be at least 5%, at least 10%, at least 20% at least 30%, at least 40% or at least 50%. The maximum amount may be 90%, or 80% or 70% or 60%. In some examples the control unit is configured to control a fan speed of the one or more cooling fans and/or an opening degree of the at least one valve.

The amount of fuel cell exhaust from the at least one fuel cell which is selectively directed into the at least one cooling system via the at least one fluid intake and/or via the at least one inlet may be controlled by manually selecting a fan speed of the one or more cooling fans and/or by manually selecting an opening degree of the at least one valve. Alternatively or additionally, the amount of fuel cell exhaust from the at least one fuel cell which is selectively directed into the at least one cooling system via the at least one fluid intake and/or via the at least one inlet may be controlled by manually or automatically controlling the fan speed of the one or more cooling fans or the degree of opening of the at least one valve using a control unit of the fuel cell system. The fan speed and/or the degree of opening may remain the same throughout the use of a fuel cell system according to the inventive concept or may be changed during its use.

In some examples the fuel cell system comprises an ambient temperature sensor and/or an ambient humidity sensor, whereby the control unit is configured to receive input from the ambient temperature sensor and/or the ambient humidity sensor. Alternatively, or additionally, in some examples, the control unit is configured to receive temperature and/or humidity input from an external source.

According to some examples the control unit is configured to receive mapped data which is used to establish the amount of water vapour in the fuel cell exhaust. According to some examples the control unit is configured to estimate the ambient humidity from a temperature sensor history.

In some examples the control unit is configured to increase the amount of the fuel cell exhaust from the at least one fuel cell which is directed into the at least one cooling system via the at least one fluid intake and/or via the at least one inlet on receiving input, from the ambient temperature sensor or some other source, that an ambient temperature is less than a threshold temperature value, and/or on receiving input from the ambient humidity sensor or some other source, that an ambient humidity is greater than a threshold humidity value. In some examples the threshold temperature value is 0°C. In some examples a threshold humidity value is a relative humidity of 70%.

In some examples the fuel cell system comprises a cyclone-based water separator, to remove water from the fuel cell exhaust.

In some examples the at least one cooling system comprises at least one shutter to throttle the at least one fluid intake. The at least one shutter may be used to regulate the amount of fluid that is introduced into the at least one cooling system via the at least one fuel intake. Excessive gas flow through the at least one cooling system, which could reduce the temperature of the mixture of fluid and fuel cell exhaust coming out of the at least one radiator, can thereby be avoided by closing the at least one fluid intake using the at least one shutter. In some examples the control unit is configured to control the at least one shutter.

According to a second aspect, the disclosure concerns a vehicle that comprises at least one fuel cell system according to any of the examples described in this disclosure. A vehicle as described herein may be any land, sea- or air-going vehicle. The vehicle may use hydrogen fuel for motive power. The vehicle may generate power by converting the chemical energy of hydrogen to mechanical energy by reacting hydrogen fuel with an oxidizing agent, such as oxygen, using at least one fuel cell to power an electric motor.

According to some examples the vehicle comprises a cab and at least one cooling system of the at least one cooling system is located behind the cab. Air may for example be introduced into the cooling system located behind the cab through an air intake located above the cab.

According to a third aspect, the disclosure concerns a method for suppressing mist formation. The method comprises selectively directing an amount of the fuel cell exhaust into at least one cooling system configured to cool the at least one fuel cell, whereby the at least one cooling system comprises at least one fluid intake, one or more cooling fans located downstream of the at least one fluid intake, and at least one radiator located upstream and/or downstream of the at least one or more cooling fans. The method comprises introducing the fuel cell exhaust into the at least one cooling system via the at least one fluid intake and/or via at least one inlet located between the one or more cooling fans and the at least one radiator. The method reduces or eliminates the risk of mist formation in the manner described above with respect to the fuel cell system according to the inventive concept.

The method according to the inventive concept may be carried out using a fuel cell system according to any of the examples described herein.

According to some examples the method further comprises removing water from the fuel cell exhaust using a water separator. The water separator may be a cyclone-based water separator.

According to some examples the method further comprises controlling the amount of the fuel cell exhaust from the at least one fuel cell which is directed into the at least one cooling system via the at least one fluid intake and/or via the at least one inlet from 0% to 100% or from any desired minimum value and any desired maximum value.

According to some examples the method further comprises determining, i.e. measuring or obtaining, an ambient temperature and/or an ambient humidity, and using the ambient temperature and/or the ambient humidity to control the fan speed of the one or more cooling fans and/or an opening degree of at least one valve configured to selectively direct an amount of the fuel cell exhaust in the exhaust flow passage into the at least one cooling system via the at least one fluid intake and/or via the at least one inlet.

According to some examples the method further comprises increasing the amount of the fuel cell exhaust from the at least one fuel cell which is directed into the at least one cooling system via the at least one fluid intake and/or via the at least one inlet on determining an ambient temperature less than a threshold temperature value, and/or on determining an ambient humidity greater than a threshold humidity value. For example, on a cold or humid day or in a cold or humid climate 70-100% of the fuel cell exhaust may be directed into the at least one cooling system to suppress mist formation. On a warm or dry day or in a warm or a dry climate 0-50% of the fuel cell exhaust may be directed into the at least one cooling system since the need to suppress mist formation is not as great.

A cold day or cold climate is a day or climate where the air temperature of the surroundings is less than a threshold temperature value. According to some examples the threshold temperature value is 0°C or 10°C A warm day or a warm climate is a day or climate where the air temperature is greater than a threshold temperature, such as greater than 20°C, or greater than 25°C, or greater than room temperature.

A humid day and/or climate is a day or climate where the air humidity of the surroundings is greater than a threshold humidity value. According to some examples the threshold humidity value is a relative humidity of 70%. Any suitable threshold values can however be selected depending on the conditions under which the fuel cell system will be used.

If a fuel cell system or vehicle comprises a plurality of cooling systems, the amount of mist suppression occurring in each cooling system may be individually controlled.

According to some examples the method further comprises increasing the amount of fuel cell exhaust from the at least one fuel cell which is directed into the at least one cooling system via the at least one fluid intake and/or via the at least one inlet on determining an ambient temperature less than a threshold temperature value, and/or on determining an ambient humidity greater than a threshold humidity value. According to some examples the threshold temperature value is 0°C and the threshold humidity value is a relative humidity greater than 70%.

According to a fourth aspect, the disclosure concerns the use of a fuel cell system or a method according to any of the examples described herein only when the temperature of the surroundings is less than 0°C and/or the relative humidity of the surroundings is greater than 70%. The fuel cell system and method according to the inventive concept is namely most useful to use in cold and/or humid conditions, such as in cold and humid weather conditions, when it is most likely that mist would form if fuel gas exhaust were emitted into its surroundings.

For example, the fan speed of the one or more fans of the fuel cell system and/or the degree of opening of the at least one valve of the fuel cell system may be adjusted to maximize re-heating of the fuel cell exhaust on detection of such a temperature of the surroundings and/or such a humidity of the surroundings. Re-heating of the fuel cell exhaust is thereby carried out when the risk of mist formation is greatest, at low temperatures and high humidities, and the need for cooling is lowest. When the temperature of the surroundings is above the threshold temperature value and/or below the threshold humidity value, re-heating of the fuel cell exhaust is avoided to maximize the cooling performance of the at least one cooling system of the fuel cell system.

The inventive concept according to any of the aspects disclosed herein thereby makes it possible to suppress mist in cold weather but to still provide good cooling in warm weather.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

### BRIEF DESCRIPTION OF THE DRAWINGS

With reference to the appended drawings, below follows a more detailed description of aspects of the disclosure cited as examples.
**FIG. 1** is a schematic diagram of an exemplary vehicle comprising a fuel cell system according to one example.
**FIG. 2** is a schematic diagram of an exemplary fuel cell system according to one example.
**FIG. 3** is a flow chart of an exemplary method according to one example.

It should be noted that certain features of the drawings have not necessarily been drawn to scale and that the dimensions of certain features may have been exaggerated for the sake of clarity.

### DETAILED DESCRIPTION

Aspects set forth below represent the necessary information to enable those skilled in the art to practice the disclosure.

The inventive concept may suppress mist formation.

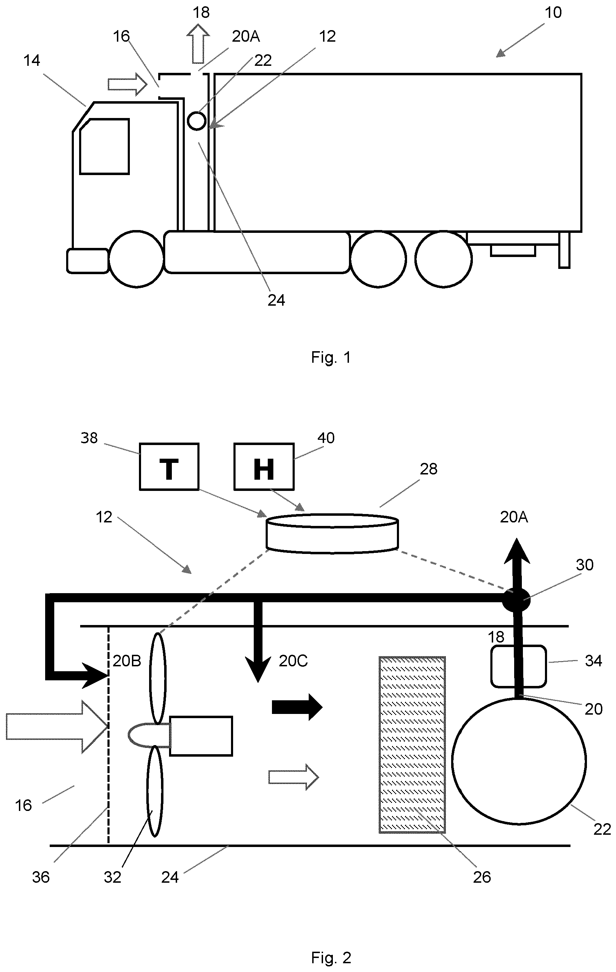

**FIG. 1** is a schematic diagram of an exemplary vehicle 10 comprising a fuel cell system 12 according to one example mounted on the vehicle 10.

In the illustrated example, the vehicle 10 comprises a cab 14 and a fuel cell system 12 comprising at least one fuel cell 22 is located behind the cab 14. The fuel cell system 12 comprises a cooling system 24 which is configured to cool the at least one fuel cell 22. The cooling system 24 comprises a ram-air intake 16 located above the cab 14. According to some examples a vehicle 10 may comprise a plurality of fuel cell systems 12 and/or a plurality of cooling systems 24, and/or a plurality of intakes 16 all located at any suitable location(s) on the vehicle 10.

Part of the fuel cell exhaust 18 generated by the at least one fuel cell 22 may be emitted into the surroundings, such as into the outside air, via an outlet 20A of an exhaust flow passage 20, such as an exhaust pipe. Such an outlet 20A to the surroundings is located at the top of the cab 14 in the example illustrated in FIG. 1, but one or more exhaust flow passage outlets 20A to the surroundings may be provided at any suitable location(s) on a vehicle 10.

If a vehicle 10 comprises a cooling system 24 located behind the cab 14 of a vehicle and a cooling system (not shown) located at the front of the vehicle 10, the two cooling systems of the vehicle 10 may be controlled so that more fuel cell exhaust 18 is directed into the at least one fluid intake 16 of one of the cooling systems, or more heat is expelled by the at least one radiator of one of the cooling systems. More mist suppression will thereby occur at one of the cooling systems than the other cooling system.

**FIG. 2** is a schematic diagram of an exemplary fuel cell system 12 according to one example. The fuel cell system 12 comprises at least one fuel cell 22 and at least one cooling system 24 configured to cool the at least one fuel cell 22. The at least one cooling system 24 comprises an air intake 16, one or more cooling fans 32 located downstream of the air intake 16 and at least one radiator 26 located downstream of the one or more cooling fans 32.

Optionally, a fuel cell system 12 according to the inventive concept may comprise one or more inlets 20C located between the one or more fans 32 and the at least one radiator 26 via which fuel cell exhaust 18 may be introduced into the at least one cooling system 24 instead of, or in addition to fuel cell exhaust 18 being introduced into the at least one cooling system 24 via the at least one fluid intake 16.

Air is introduced into the at least one cooling system 24 via the air intake 16 and/or via the at least one inlet 20C and is pushed by the one or more cooling fans 32 of the cooling system 24 and ram-air through at least one radiator 26 located downstream of the one or more cooling fans 32. A cooling system 24 may comprise any number of cooling fans 32, such as one, two, three, four, five, six or more cooling fans 32. A cooling system 22 may comprise any number of radiators 26, such as one, two, three, four, five, six or more radiators 26. Optionally, the fuel cell system 12 may comprise a water separator 34. A water separator 34 may be located in the exhaust flow passage 20.

The fuel cell system 12 comprises an exhaust flow passage 20 configured to convey the fuel cell exhaust 18 emitted from the at least one fuel cell 22 away from the at least one fuel cell 22. Optionally, a part of the fuel cell exhaust 18 may be conveyed towards a first exhaust flow passage outlet 20A into the surroundings, such as into the outside air. At least part of the fuel cell exhaust 18 is conveyed towards a second exhaust flow passage outlet 20B that is located upstream the air intake 16 and/or towards an inlet 20C of at least one cooling system 24 of the fuel cell system 12, whereby the fuel cell exhaust 18 will be introduced into the at least one cooling system 24 via the air intake 16 and/or via the inlet 20C and will be mixed with air. The mixture of air and fuel cell exhaust 18 and will pass through the one or more fans 32 if fuel cell exhaust 18 is introduced via the fluid inlet 16 and/or air and fuel cell exhaust 18 will be mixed downstream of the one or more cooling fans 32 if fuel cell exhaust 18 is introduced via the inlet 20C. The mixture of air and fuel cell exhaust 18 will then pass through the at least one radiator 26 rather than being emitted into the surroundings.

The fuel cell system 12 comprises at least one valve 30 configured to selectively direct an amount of the fuel cell exhaust 18 in the exhaust flow passage 20 into the at least one cooling system 24 via the air intake 16 and/or via the inlet 20C.

The fuel cell exhaust 18 emitted by the at least one fuel cell 22 usually has a temperature of about 20°C above the ambient temperature. The at least one radiator 26 may be configured to heat the mixture of gas and fuel cell exhaust 18 passing through the at least one radiator 26 to a temperature of 55-65°C

For example, the at least one radiator 26 may be configured to be fed with 75°C coolant, which is cooled to about 60°C by the mixture of air and fuel cell exhaust 18 that is introduced via the air intake 16 and/or via the inlet 20C before the coolant is returned to the at least one fuel cell 22. As the mixture of air and fuel cell exhaust 18 passes through the at least one radiator 26 it will consequently be heated up to 60°C. The greater the temperature difference between the fuel cell exhaust 18 and the at least one radiator 26, the greater the effect of the re-heating will be, which is an advantage when using the fuel cell system 12 at low ambient temperatures.

The cooling system 24 may comprise at least one shutter 36 to throttle the at least one fluid intake 16 to prevent excessive gas flow through the cooling system 24, which could reduce the temperature of the mixture of gas and fuel cell exhaust 18 coming out of the at least one radiator 26.

The fuel cell system 12 comprises a control unit 28 configured to control the amount of the fuel cell exhaust 18 from the at least one fuel cell 22 which is selectively directed into the at least one cooling system 24 via the at least one fluid intake 16 and/or via the at least one inlet 20C, from 0% to 100% for example. In some examples the control unit 28 may be configured to control a fan speed of the one or more cooling fans 32 and/or an opening degree of the at least one valve 30.

In some examples the fuel cell system 12 comprises an ambient temperature sensor 38 and/or an ambient humidity sensor 40, whereby the control unit 28 is configured to receive an ambient temperature input from the ambient temperature sensor 38, and/or an ambient humidity input from the ambient humidity sensor 40. In some examples the control unit 28 is configured to increase the amount of the fuel cell exhaust 18 from the at least one fuel cell 22 which is directed into the at least one cooling system 24 via the at least one fluid intake 16 and/or via the at least one inlet 20C on receiving input from the ambient temperature sensor 38 that an ambient temperature is less than a threshold temperature value, and/or on receiving input from the ambient humidity sensor 40 that an ambient humidity is greater than a threshold humidity value. In some examples the threshold temperature value is 0°C and the threshold humidity value is a relative humidity of 70%. The threshold values may however be set to any suitable values and will vary depending on where and/or when the fuel cell system 12 is used. Alternatively or additionally, a control unit 28 may be provided with input concerning the temperature and/or humidity of the surroundings, such as a signal containing information about the prevailing ambient conditions or weather conditions.

In some examples the at least one cooling system 24 comprises a plurality of cooling systems and the control unit 28 is configured to control the amount of mist suppression occurring at at least one, some or all of the cooling systems 24.

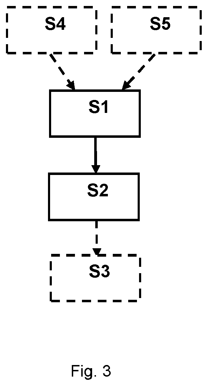

**FIG. 3** is a flow chart of an exemplary method for suppressing mist formation according to one example. The method comprises selectively directing an amount of fuel cell exhaust into at least one cooling system configured to cool at least one fuel cell, S1, whereby the at least one cooling system 24 comprises at least one fluid intake 16, one or more cooling fans 32 located downstream of the at least one fluid intake 16 and at least one radiator 26 located upstream and/or downstream of the one or more cooling fans 32, S1. The method comprises introducing the fuel cell exhaust 18 into the at least one calling system 24 via the at least one fluid intake 16 and/or via at least one inlet 20C located between the one or more cooling fans 32 and the at least one radiator 26, S2.

According to some examples the method further optionally comprises heating gas and the fuel cell exhaust 18 flowing through the at least one fluid intake 16 and/or through the at least one inlet 20C to a particular temperature or to a temperature within a particular temperature range, S3.

According to some examples the method optionally comprises determining, i.e. measuring or obtaining, an ambient temperature, S4, and/or an ambient humidity, S5, and using the ambient temperature and/or the ambient humidity to control at least one of the following: a fan speed of the one or more cooling fans 32 and/or a degree of opening of at least one valve 30 configured to selectively direct an amount of the fuel cell exhaust 18 into the at least one cooling system 24 via the at least one fluid intake 16 and/or the at least one inlet 20C . The amount of mist suppression occurring at at least one, some, or all of the cooling systems 24 may thereby be controlled.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the system in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A fuel cell system (12) comprising:
- at least one fuel cell (22),
- at least one cooling system (24) configured to cool said at least one fuel cell (22), whereby said at least one cooling system (24) comprises at least one fluid intake (16), one or more cooling fans (32) located downstream of said at least one fluid intake (16), and at least one radiator (26) located upstream and/or downstream of said one or more cooling fans (32),
- an exhaust flow passage (20) configured to convey fuel cell exhaust (18) emitted from said at least one fuel cell (22) away from said at least one fuel cell (22), and
- at least one valve (30) configured to selectively direct an amount of said fuel cell exhaust (18) in said exhaust flow passage (20) into said at least one cooling system (24) via said at least one fluid intake (16) and/or via at least one inlet (20C) located between said one or more cooling fans (32) and said at least one radiator (26).

2. A fuel cell system (12) according to claim 1, whereby said fuel cell system (12) is mounted on a mobile object, such as a vehicle (10).

3. A fuel cell system (12) according to claim 1 or 2, whereby said at least one fluid intake (16) comprises at least one ram-fluid intake (16), such as at least one ram-air intake (16).

4. A fuel cell system (12) according to any of the preceding claims, whereby at least one fluid intake (16) of said at least one fluid intake (16) and/or at least one inlet (20C) of said at one inlet (20C) is/are located upstream of said at least one radiator (26).

5. A fuel cell system (12) according to any of the preceding claims, whereby said fuel cell system (12) comprises a control unit (28) that is configured to control the amount of said fuel cell exhaust (18) from said at least one fuel cell (22) which is directed into said at least one cooling system (24) via said at least one fluid intake (16) and/or said at least one inlet (20C) from 0% to 100%.

6. A fuel cell system (12) according to claim 5, whereby said control unit (28) is configured to control a fan speed of said one or more cooling fans (32) and/or an opening degree of said at least one valve (30).

7. A fuel cell system (12) according to claims 5 or 6, whereby said fuel cell system (12) comprises an ambient temperature sensor and/or an ambient humidity sensor, whereby said control unit (28) is configured to receive input from said ambient temperature sensor and/or said ambient humidity sensor.

8. A fuel cell system (12) according to claim 7, whereby said control unit (28) is configured to increase the amount of said fuel cell exhaust (18) from said at least one fuel cell (22) which is directed into said at least one cooling system (24) via said at least one fluid intake (16) and/or said at least one inlet (20C).on receiving input that an ambient temperature is less than a threshold temperature value, and/or on receiving input that an ambient humidity is greater than a threshold humidity value.

9. A fuel cell system (12) according to claim 8, whereby said threshold temperature value is 0°C and said threshold humidity value is a relative humidity of 70%; and/or
whereby said at least one radiator (26) is configured to heat said fuel cell exhaust (18) to a temperature of 55-65°C; and/or
whereby said fuel cell system (12) comprises a water separator (34); and/or
whereby said at least one cooling system (24) comprises at least one shutter (36) to throttle said at least one fluid intake (16).

10. A vehicle (10), whereby said vehicle (10) comprises at least one fuel cell (22) system (12) according to any of the preceding claims,
whereby said vehicle (10) optionally comprises a cab (14) and at least one cooling system (24) is located behind said cab (14).

11. A method for suppressing mist formation, whereby the method comprises:
- selectively directing an amount of fuel cell exhaust (18) emitted from at least one fuel cell (22) into at least one cooling system (24) configured to cool said at least one fuel cell (22), whereby said at least one cooling system (24) comprises at least one fluid intake (16), one or more cooling fans (32) located downstream of said at least one fluid intake (16), and at least one radiator (26) located upstream and/or downstream of said one or more cooling fans (32), and
- introducing said fuel cell exhaust (18) into said at least one cooling system (24) via said at least one fluid intake (16) and/or via at least one inlet (20C) located between said one or more cooling fans (32) and said at least one radiator (26).

12. A method according to claim 11, whereby said method further comprises removing water from said fuel cell exhaust (18) using a water separator (34).

13. A method according to claim 11 or 12, whereby said method further comprises controlling the amount of said fuel cell exhaust (18) from said at least one fuel cell (22) which is directed into said at least one cooling system (24) via said at least one fluid intake (16) and/or said at least one inlet (20C) from 0% to 100%.

14. A method according to any of claims 11-13, whereby said method further comprises determining an ambient temperature and/or determining an ambient humidity and using said ambient temperature and/or said ambient humidity to control at least one of the following:
- a fan speed of said one or more cooling fans (32),
- an opening degree of at least one valve (30) configured to selectively direct an amount of said fuel cell exhaust (18) in said exhaust flow passage (20) into said at least one cooling system (24) via said at least one fluid intake (16) and/or via said at least one inlet (20C); and/or
whereby said method further comprises increasing the amount of said fuel cell exhaust (18) from said at least one fuel cell (22) which is directed into said at least one cooling system (24) via said at least one fluid intake (16) and/or via said at least one inlet (20C) on determining an ambient temperature less than a threshold temperature value, and/or on determining an ambient humidity greater than a threshold humidity value.

15. A method according to claim 14, whereby said threshold temperature value is 0°C and said threshold humidity value us a relative humidity greater than 70%.

## Patentansprüche

1. Brennstoffzellensystem (12), umfassend:
- mindestens eine Brennstoffzelle (22),
- mindestens ein Kühlsystem (24), das konfiguriert ist, um die mindestens eine Brennstoffzelle (22) zu kühlen, wobei das mindestens eine Kühlsystem (24) mindestens eine Fluidansaugöffnung (16), ein oder mehrere Kühlgebläse (32), die stromabwärts der mindestens einen Fluidansaugöffnung (16) gelegen sind, und mindestens einen Kühler (26), der stromaufwärts und/oder stromabwärts des einen oder der mehreren Kühlgebläse (32) gelegen ist, umfasst,
- einen Abgasströmungskanal (20), der konfiguriert ist, um Brennstoffzellenabgas (18), das von der mindestens einen Brennstoffzelle (22) ausgestoßen wird, von der mindestens einen Brennstoffzelle (22) weg zu befördern, und
- mindestens ein Ventil (30), das konfiguriert ist, um selektiv eine Menge an Brennstoffzellenabgas (18) in dem Abgasströmungskanal (20) über die mindestens eine Fluidansaugöffnung (16) und/oder über mindestens einen Einlass (20C), der zwischen dem einen oder den mehreren Kühlgebläsen (32) und dem mindestens einen Kühler (26) gelegen ist, in das mindestens eine Kühlsystem (24) zu leiten.

2. Brennstoffzellensystem (12) nach Anspruch 1, wobei das Brennstoffzellensystem (12) an einem mobilen Objekt, wie einem Fahrzeug (10), montiert ist.

3. Brennstoffzellensystem (12) nach Anspruch 1 oder 2, wobei die mindestens eine Fluidansaugöffnung (16) mindestens eine Staudruckfluidansaugöffnung (16), wie mindestens eine Staudruckluftansaugöffnung (16), umfasst.

4. Brennstoffzellensystem (12) nach einem der vorstehenden Ansprüche, wobei mindestens eine Fluidansaugöffnung (16) der mindestens einen Fluidansaugöffnung (16) und/oder mindestens ein Einlass (20C) des mindestens einen Einlasses (20C) stromaufwärts des mindestens einen Kühlers (26) gelegen ist/sind.

5. Brennstoffzellensystem (12) nach einem der vorstehenden Ansprüche, wobei das Brennstoffzellensystem (12) eine Steuereinheit (28) umfasst, die konfiguriert ist, um die Menge an Brennstoffzellenabgas (18) von der mindestens einen Brennstoffzelle (22), die über die mindestens eine Fluidansaugöffnung (16) und/oder den mindestens einen Einlass (20C) in das mindestens eine Kühlsystem (24) geleitet wird, von 0 % bis 100 % zu steuern.

6. Brennstoffzellensystem (12) nach Anspruch 5, wobei die Steuereinheit (28) konfiguriert ist, um eine Gebläsedrehzahl des einen oder der mehreren Kühlgebläse (32) und/oder einen Öffnungsgrad des mindestens einen Ventils (30) zu steuern.

7. Brennstoffzellensystem (12) nach Anspruch 5 oder 6, wobei das Brennstoffzellensystem (12) einen Umgebungstemperaturfühler und/oder einen Umgebungsfeuchtigkeitssensor umfasst, wobei die Steuereinheit (28) konfiguriert ist, um Eingaben von dem Umgebungstemperaturfühler und/oder dem Umgebungsfeuchtigkeitssensor zu empfangen.

8. Brennstoffzellensystem (12) nach Anspruch 7, wobei die Steuereinheit (28) konfiguriert ist, um die Menge an Brennstoffzellenabgas (18) aus der mindestens einen Brennstoffzelle (22), das über die mindestens eine Fluidansaugöffnung (16) und/oder den mindestens einen Einlass (20C) in das mindestens eine Kühlsystem (24) geleitet wird, bei Empfang einer Eingabe, dass eine Umgebungstemperatur kleiner als ein Schwellentemperaturwert ist, und/oder bei Empfang einer Eingabe, dass eine Umgebungsfeuchtigkeit größer als ein Schwellenfeuchtigkeitswert ist, zu erhöhen.

9. Brennstoffzellensystem (12) nach Anspruch 8, wobei der Temperaturschwellenwert 0 °C beträgt und der Feuchtigkeitsschwellenwert eine relative Feuchtigkeit von 70 % ist; und/oder
wobei der mindestens eine Kühler (26) konfiguriert ist, um das Brennstoffzellenabgas (18) auf eine Temperatur von 55-65 °C zu erwärmen; und/oder
wobei das Brennstoffzellensystem (12) einen Wasserabscheider (34) umfasst; und/oder
wobei das mindestens eine Kühlsystem (24) mindestens eine Klappe (36) umfasst, um die mindestens eine Fluidansaugöffnung (16) zu drosseln.

10. Fahrzeug (10), wobei das Fahrzeug (10) mindestens ein System (12) von Brennstoffzellen (22) nach einem der vorstehenden Ansprüche umfasst,
wobei das Fahrzeug (10) optional eine Kabine (14) umfasst und mindestens ein Kühlsystem (24) hinter der genannten Kabine (14) gelegen ist.

11. Verfahren zum Unterdrücken von Nebelbildung, wobei das Verfahren umfasst:
- selektives Leiten einer Menge an Brennstoffzellenabgas (18), das von mindestens einer Brennstoffzelle (22) ausgestoßen wird, in mindestens ein Kühlsystem (24), das konfiguriert ist, um die mindestens eine Brennstoffzelle (22) zu kühlen, wobei das mindestens eine Kühlsystem (24) mindestens eine Fluidansaugöffnung (16), einen oder mehrere Kühlgebläse (32), die stromabwärts der mindestens einen Fluidansaugöffnung (16) gelegen sind, und mindestens einen Kühler (26), der stromaufwärts und/oder stromabwärts des einen oder der mehreren Kühlgebläse (32) gelegen ist, umfasst, und
- Einleiten des Brennstoffzellenabgases (18) in das mindestens eine Kühlsystem (24) über die mindestens eine Fluidansaugöffnung (16) und/oder über mindestens einen Einlass (20C), der zwischen dem einen oder den mehreren Kühlgebläsen (32) und dem mindestens einen Kühler (26) gelegen ist.

12. Verfahren nach Anspruch 11, wobei das Verfahren ferner ein Entfernen von Wasser aus dem Brennstoffzellenabgas (18) unter Verwendung eines Wasserabscheiders (34) umfasst.

13. Verfahren nach Anspruch 11 oder 12, wobei das Verfahren ferner das Steuern der Menge an Brennstoffzellenabgas (18) aus der mindestens einen Brennstoffzelle (22), die über die mindestens eine Fluidansaugöffnung (16) und/oder den mindestens einen Einlass (20C) in das mindestens eine Kühlsystem (24) geleitet wird, von 0 % bis 100 % umfasst.

14. Verfahren nach einem der Ansprüche 11 bis 13, wobei das Verfahren ferner ein Bestimmen einer Umgebungstemperatur und/oder das Bestimmen einer Umgebungsfeuchtigkeit und das Verwenden der Umgebungstemperatur und/oder der Umgebungsfeuchtigkeit umfasst, um mindestens eines zu steuern von:
- einer Gebläsedrehzahl des einen oder der mehreren Kühlgebläse (32),
- einem Öffnungsgrad mindestens eines Ventils (30), das konfiguriert ist, um selektiv eine Menge an Brennstoffzellenabgas (18) in dem Abgasströmungskanal (20) über die mindestens eine Fluidansaugöffnung (16) und/oder über den mindestens einen Einlass (20C) in das mindestens eine Kühlsystem (24) zu leiten; und/oder
wobei das Verfahren ferner das Erhöhen der Menge an Brennstoffzellenabgas (18) aus der mindestens einen Brennstoffzelle (22) umfasst, das über die mindestens eine Fluidansaugöffnung (16) und/oder über den mindestens einen Einlass (20C) in das mindestens eine Kühlsystem (24) geleitet wird, bei Bestimmung einer Umgebungstemperatur, die niedriger als ein Schwellentemperaturwert ist, und/oder bei Bestimmung einer Umgebungsfeuchtigkeit, die höher als ein Schwellenfeuchtigkeitswert ist.

15. Verfahren nach Anspruch 14, wobei der Schwellentemperaturwert 0 °C beträgt und der Schwellenfeuchtigkeitswert eine relative Feuchtigkeit von mehr als 70 % ist.

## Revendications

1. Système de pile à combustible (12) comprenant :
- au moins une pile à combustible (22),
- au moins un système de refroidissement (24) configuré pour refroidir ladite au moins une pile à combustible (22), moyennant quoi ledit au moins un système de refroidissement (24) comprend au moins une admission de fluide (16), un ou plusieurs ventilateurs de refroidissement (32) situés en aval de ladite au moins une admission de fluide (16), et au moins un radiateur (26) situé en amont et/ou en aval dudit ou desdits ventilateurs de refroidissement (32),
- un passage d'écoulement d'échappement (20) conçu pour acheminer un échappement de pile à combustible (18) émis par ladite au moins une pile à combustible (22) loin de ladite au moins une pile à combustible (22), et
- au moins une soupape (30) conçue pour diriger sélectivement une quantité dudit échappement de pile à combustible (18) dans ledit passage d'écoulement d'échappement (20) dans ledit au moins un système de refroidissement (24) par l'intermédiaire de ladite au moins une admission de fluide (16) et/ou par l'intermédiaire d'au moins une entrée (20C) située entre ledit ou lesdits ventilateurs de refroidissement (32) et ledit au moins un radiateur (26).

2. Système de pile à combustible (12) selon la revendication 1, moyennant quoi ledit système de pile à combustible (12) est monté sur un objet mobile, tel qu'un véhicule (10).

3. Système de pile à combustible (12) selon la revendication 1 ou 2, moyennant quoi ladite au moins une admission de fluide (16) comprend au moins une admission de fluide dynamique (16), telle qu'au moins une admission d'air dynamique (16).

4. Système de pile à combustible (12) selon l'une quelconque des revendications précédentes, moyennant quoi au moins une admission de fluide (16) de ladite au moins une admission de fluide (16) et/ou au moins une entrée (20C) de ladite au moins une entrée (20C) est/sont situées en amont dudit au moins un radiateur (26).

5. Système de pile à combustible (12) selon l'une quelconque des revendications précédentes, moyennant quoi ledit système de pile à combustible (12) comprend une unité de commande (28) qui est configurée pour commander la quantité dudit échappement de pile à combustible (18) provenant de ladite au moins une pile à combustible (22) qui est dirigée dans ledit au moins un système de refroidissement (24) par l'intermédiaire de ladite au moins une admission de fluide (16) et/ou de ladite au moins une entrée (20C) de 0 % à 100 %.

6. Système de pile à combustible (12) selon la revendication 5, moyennant quoi ladite unité de commande (28) est conçue pour commander une vitesse de ventilateur dudit ou desdits ventilateurs de refroidissement (32) et/ou un degré d'ouverture de ladite au moins une soupape (30).

7. Système de pile à combustible (12) selon les revendications 5 ou 6, moyennant quoi ledit système de pile à combustible (12) comprend un capteur de température ambiante et/ou un capteur d'humidité ambiante, moyennant quoi ladite unité de commande (28) est configurée pour recevoir des données dudit capteur de température ambiante et/ou dudit capteur d'humidité ambiante.

8. Système de pile à combustible (12) selon la revendication 7, moyennant quoi ladite unité de commande (28) est configurée pour augmenter la quantité dudit échappement de pile à combustible (18) provenant de ladite au moins une pile à combustible (22) qui est dirigée dans ledit au moins un système de refroidissement (24) par l'intermédiaire de ladite au moins une admission de fluide (16) et/ou de ladite au moins une entrée (20C).à la réception d'une entrée indiquant qu'une température ambiante est inférieure à une valeur de température seuil, et/ou à la réception d'une entrée indiquant qu'une humidité ambiante est supérieure à une valeur d'humidité seuil.

9. Système de pile à combustible (12) selon la revendication 8, moyennant quoi ladite valeur de température seuil est de 0 °C et ladite valeur d'humidité seuil est une humidité relative de 70 % ; et/ou
moyennant quoi ledit au moins un radiateur (26) est conçu pour chauffer ledit échappement de pile à combustible (18) à une température de 55 à 65 °C ; et/ou
moyennant quoi ledit système de pile à combustible (12) comprend un séparateur d'eau (34) ; et/ou
moyennant quoi ledit au moins un système de refroidissement (24) comprend au moins un obturateur (36) pour étrangler ladite au moins une admission de fluide (16).

10. Véhicule (10), moyennant quoi ledit véhicule (10) comprend au moins un système (12) de pile à combustible (22) selon l'une quelconque des revendications précédentes,
moyennant quoi ledit véhicule (10) comprend éventuellement une cabine (14) et au moins un système de refroidissement (24) est situé derrière ladite cabine (14).

11. Procédé permettant de supprimer une formation de brouillard, dans lequel le procédé comprend :
- la direction sélective d'une quantité d'échappement de pile à combustible (18) émise par au moins une pile à combustible (22) dans au moins un système de refroidissement (24) conçu pour refroidir ladite au moins une pile à combustible (22), moyennant quoi ledit au moins un système de refroidissement (24) comprend au moins une admission de fluide (16), un ou plusieurs ventilateurs de refroidissement (32) situés en aval de ladite au moins une admission de fluide (16), et au moins un radiateur (26) situé en amont et/ou en aval dudit ou desdits ventilateurs de refroidissement (32), et
- l'introduction dudit échappement de pile à combustible (18) dans ledit au moins un système de refroidissement (24) par l'intermédiaire de ladite au moins une admission de fluide (16) et/ou par l'intermédiaire d'au moins une entrée (20C) située entre ledit ou lesdits ventilateurs de refroidissement (32) et ledit au moins un radiateur (26).

12. Procédé selon la revendication 11, moyennant quoi ledit procédé comprend en outre l'élimination de l'eau dudit échappement de pile à combustible (18) à l'aide d'un séparateur d'eau (34).

13. Procédé selon la revendication 11 ou 12, moyennant quoi ledit procédé comprend en outre la commande de la quantité dudit échappement de pile à combustible (18) provenant de ladite au moins une pile à combustible (22) qui est dirigée dans ledit au moins un système de refroidissement (24) par l'intermédiaire de ladite au moins une admission de fluide (16) et/ou de ladite au moins une entrée (20C) de 0 % à 100 %.

14. Procédé selon l'une quelconque des revendications 11 à 13, moyennant quoi ledit procédé comprend en outre la détermination d'une température ambiante et/ou la détermination d'une humidité ambiante et l'utilisation de ladite température ambiante et/ou de ladite humidité ambiante pour commander au moins l'un parmi ce qui suit :
- une vitesse de ventilateur dudit ou desdits ventilateurs de refroidissement (32),
- un degré d'ouverture d'au moins une soupape (30) conçue pour diriger sélectivement une quantité dudit échappement de pile à combustible (18) dans ledit passage d'écoulement d'échappement (20) dans ledit au moins un système de refroidissement (24) par l'intermédiaire de ladite au moins une admission de fluide (16) et/ou par l'intermédiaire de ladite au moins une entrée (20C) ; et/ou
moyennant quoi ledit procédé comprend en outre l'augmentation de la quantité dudit échappement de pile à combustible (18) provenant de ladite au moins une pile à combustible (22) qui est dirigée dans ledit au moins un système de refroidissement (24) par l'intermédiaire de ladite au moins une admission de fluide (16) et/ou par l'intermédiaire de ladite au moins une entrée (20C) lors de la détermination d'une température ambiante inférieure à une valeur de température seuil, et/ou lors de la détermination d'une humidité ambiante supérieure à une valeur d'humidité seuil.

15. Procédé selon la revendication 14, moyennant quoi ladite valeur de température seuil est de 0 °C et ladite valeur d'humidité seuil utilise une humidité relative supérieure à 70 %.
